# EUROPÄISCHE PATENTSCHRIFT

(11) **EP 3 272 965 B1**
(45) Veröffentlichungstag und Bekanntmachung des Hinweises auf die Patenterteilung: **03.07.2019**
(21) Anmeldenummer: 17181785.1
(22) Anmeldetag: 18.07.2017
(51) Int. Cl.: E04F 15/024

(54) **BRANDABSCHOTTUNG FÜR DOPPELBODENKONSTRUKTIONEN**
FIRE BARRIER DEVICE FOR FALSE FLOOR CONSTRUCTION
DISPOSITIF COUPE-FEU POUR STRUCTURES DE FAUX-PLANCHERS

(30) Priorität: 20.07.2016 DE 102016113425
(43) Veröffentlichungstag der Anmeldung: 24.01.2018
(73) Patentinhaber: svt BRANDSCHUTZ Vertriebsgesellschaft mbH, 21217 Seevetal (DE)
(72) Erfinder: Lüdemann, Andreas, 21335 Lüneburg (DE)
(74) Vertreter: Stüven, Ralf

(56) Entgegenhaltungen:
- DE-A1- 19 959 494
- DE-A1-102014 108 549

## Beschreibung

Die Erfindung betrifft eine Brandabschottung für Doppelbodenkonstruktionen, eine Doppelbodenkonstruktion und ein Verfahren zur Herstellung einer Brandabschottung für Doppelbodenkonstruktionen.

Bei großen, mehrgeschossigen Gebäuden werden zunehmend so genannte Doppelböden auf den Rohfußböden installiert. Der Zwischenraum wird als Installationsebene genutzt. Hierbei werden raumabschließende Bereiche unterlaufen, die entsprechend dem geforderten Feuerwiderstand abgeschottet werden müssen, wobei für Installationselemente wie Rohre und Kabel entsprechend brandgeschützte Durchführungen vorgesehen werden. Eine Abschottung für Doppelbodensysteme ist beispielsweise in der DE 199 59 494 A1 beschrieben.

Aus der DE 10 2014 108 549 A1 ist eine brandgeschützte Kabel-/Rohrdurchführung bekannt, die eine einseitig offene Halbschale umfasst, in deren Innenfläche ein flächiger flexibler Träger angeordnet ist, der auf seiner zum Halbschaleninneren weisenden Fläche zumindest teilweise mit einem Dämmschichtbildner beschichtet ist, und deren Öffnung durch einen flächigen flexiblen Träger verschlossen ist, dessen zum Halbschaleninneren weisende Fläche ebenfalls mit einem Dämmschichtbildner beschichtet ist.

Die brandschutztechnisch notwendigen Abschottungen lassen sich für Doppelbodensysteme bisher aufgrund der oftmals stark eingeschränkten Zugänglichkeit nur unter erhöhtem Aufwand erstellen. Eine weitere Erschwernis sind Abschottungsbereiche, in denen oberhalb des Doppelbodens Brandschutztüren angeordnet werden. In den allgemeinen bauaufsichtlichen Zulassungen werden hier Mindestabstände zwischen der Öffnung für die Brandschutztür und der Öffnung für die Abschottung von 200 mm gefordert. Diese sind in der Regel nicht einzuhalten.

Aufgabe der vorliegenden Erfindung ist es, eine möglichst einfache, leicht installierbare und vergleichsweise kostengünstige Brandabschottung bereit zu stellen, die die Nachteile des Standes der Technik nicht aufweist.

Erfindungsgemäß wird die Aufgabe in einem ersten Aspekt gelöst durch eine Brandabschottung für Doppelbodenkonstruktionen mit einem Rohboden, mindestens einer über dem Rohboden angeordneten Doppelbodenplatte und einem zwischen Rohboden und Doppelbodenplatte gebildeten Bodenhohlraum mit einer lichten Höhe H_{B}, umfassend
i. einen im Wesentlichen quaderförmigen Mineralfaserblock mit einer der lichten Höhe HB entsprechenden Höhe H_{M} und mit mindestens einer zum Rohboden hin offenen Ausnehmung,
ii. eine in die mindestens eine Ausnehmung des Mineralfaserblocks passend aufgenommene Halbschale, wobei die Halbschale eine zum Halbschaleninneren weisende Innenfläche, eine zum Rohboden hin gerichtete Öffnung mit zwei die Öffnung flankierenden Rändern und einen in der Innenfläche der Halbschale angeordneten ersten flächigen flexiblen Träger, der auf seiner zum Halbschaleninneren gerichteten Fläche zumindest teilweise mit einer ersten Brandschutzschicht beschichtet ist, umfasst, und
iii. einen die Öffnung der Halbschale verschließenden zweiten flächigen flexiblen Träger, der auf seiner zum Halbschaleninneren gerichteten Fläche zumindest teilweise mit einer zweiten Brandschutzschicht beschichtet ist.

Die Erfindung stellt eine ggfs. nachrüstbare, einfache, flexible, leicht installierbare und kostengünstige, dabei aber zuverlässige und den Brandschutzanforderungen genügende oder an die erforderlichen Brandschutzanforderungen leicht anpassbare Abschottung für Doppelbodenkonstruktionen bereit. Die Erfindung kombiniert in vorteilhafter Weise eine oder mehrere brandgeschützte Kabel-/Rohrdurchführungen, wie sie in der DE 10 2014 108 549 A1 beschrieben ist, mit einem Mineralfaserblock, der so ausgestaltet ist, dass die Kabel-/Rohrdurchführung(en) passend in hierfür vorgesehene Aufnehmungen aufhehmbar ist (sind). Die erfindungsgemäße Brandabschottung schottet Bereiche des Installationsraumes einer Doppelbodenkonstruktion wirkungsvoll gegeneinander ab, um die Ausbreitung von Flammen oder Rauch über die Installationsebene zu verhindern oder zu erschweren, erlaubt jedoch die Durchführung von Installationselementen wie Rohren und Kabeln, ohne dass die für Doppelbodenkonstruktionen charakteristische Flexibilität bei der Installation solcher Elemente verloren ginge. Die erfindungsgemäße Brandabschottung stellt einen Installationsblock bereit, der vorteilhaft in auf Rastermaßen basierenden Systemgebäuden eingesetzt werden kann. Mithilfe der erfindungsgemäßen Abschottung können definierte Bereiche in der Doppelbodenkonstruktion als Installationswege genutzt werden. Hier können Datenleitungen, Elektrokabel, Rohre, Leitungen und dergleichen verlegt werden. Im Falle vorgegebener Rastermaße kann beispielsweise auch ein einheitlicher Installationsblock für eine Abschottungsmaßnahme verwendet werden.

Im Falle eines Brandes reagiert die auf dem flexiblen flächigen Träger aufgebrachte Brandschutzschicht. Im bevorzugten Falle eines Dämmschichtbildners als Brandschutzmittel in der Brandschutzschicht schäumt dieser beispielsweise bei Überschreiten einer bestimmten Temperatur, z.B. 150 °C, auf, wodurch die von der Halbschale gebildete Kabel-/Rohrdurchführung von dem gebildeten Schaum vorzugsweise zumindest in einem Teilbereich über den gesamten Querschnitt verschlossen wird.

Unter einer "Doppelbodenkonstruktion" oder einem "Doppelbodensystem" wird eine Systembodenkonstruktion für den Innenausbau von Gebäuden verstanden, bei der ein zweiter Boden mittels einer Unterkonstruktion über dem eigentlichen Boden (Rohboden) eines Raumes angeordnet ist und die begehbare Fläche bildet, und zwar so, dass im Wesentlichen jede Stelle des Raumes unterhalb des Doppelbodens jederzeit zugänglich bleibt (s. auch DIN EN 12825). Der Boden wird regelmäßig von Doppelbodenplatten gebildet, die beispielsweise auf rasterförmig angeordneten Doppelbodenstützen liegen. Der so gebildete Bodenhohlraum dient als Installationsraum zur Installation von Installationselementen wie Kabeln, Rohren und dergleichen. Der Bodenhohlraum ist durch Aufnehmen einzelner Doppelbodenplatten leicht zugänglich. Die Doppelbodenplatten können beispielsweise aus Holz (hochverdichtete Flachpressplatten), Zementfaser, Anhydrit, Gips (faserverstärkte Gipsplatten), Stahl oder Aluminium bestehen. Doppelbodenstützen können beispielsweise aus Stahl oder Aluminium gefertigt und gegebenenfalls durch Rasterstäbe verbunden sein.

Unter einer "Halbschale" wird hier ein Teil, vorzugsweise, aber nicht notwendig, eine Hälfte, eines Hohlkörpers verstanden, der zusammen mit einer weiteren Halbschale einen Hohlkörper ergeben würde. Beispielsweise kann es sich um im Querschnitt kreisringabschnittförmige, beispielsweise halbkreisförmige, um halbelliptische oder halbpolygonale Teile handeln. "Halbpolygonal" bedeutet in diesem Zusammenhang einen Ausschnitt aus einem polygonalen Querschnitt. Auch unregelmäßige Formen sind selbstverständlich möglich, wenn auch nicht bevorzugt. Insbesondere wird hier unter einer "Halbschale" daher eine allgemein rinnenförmige oder u-förmige Vorrichtung verstanden, die Kabel, Rohre oder dergleichen aufnehmen kann.

Unter einem "flächigen Träger" wird hier ein im Wesentlichen flächig ausgebildetes, d.h. sich in nur zwei Dimensionen in nennenswertem Umfang ausdehnendes Substrat verstanden. Ein Beispiel für einen flächigen Träger im Sinne der Erfindung ist ein Gewebeabschnitt, z.B. ein Glasfasergewebe oder Metallgewebe, oder eine Folie, beispielsweise eine thermoplastische, duroplastische oder metallische Folie. Unter den Begriff "Träger" fallen auch Verstärkungslagen aus beispielsweise Glas- oder Kunststofffasern. Der Begriff "flexibel" in Zusammenhang mit dem flächigen Träger bedeutet, dass der Träger vorzugsweise von Hand und ohne Werkzeugeinsatz geformt, beispielsweise gebogen, umgeschlagen und/oder gefaltet werden kann.

Unter einer "Brandschutzschicht" wird hier eine mindestens ein Brandschutzmittel umfassende Schicht, beispielsweise eine Schicht aus einem in eine Matrix, ein Lösungsmittel oder dergleichen eingebetteten Brandschutzmittel, beispielsweise einem Dämmschichtbildner, verstanden. Der Begriff erfasst insbesondere Schichten, die vorzugsweise dazu dienen, die Ausbreitung eines Brandes auf andere Strukturen als die Schicht selbst, beispielsweise hinter der Brandschutzschicht liegende oder von der Brandschutzschicht umgebene Strukturen, und nicht nur das Übergreifen eines Brandes auf die Schicht mit dem Brandschutzmittel selbst zu verhindern oder zu hemmen. Eine Brandschutzschicht hat somit vorzugsweise einen raumabschließenden oder -abgrenzenden Charakter. Unter einem "Brandschutzmittel" wird hier ein Stoff oder eine Stoffzusammensetzung verstanden, der bzw. die eine brandhemmende Wirkung, also eine die Ausbreitung eines Brandes einschränkende, verlangsamende oder verhindernde Wirkung entfaltet. Beispiele für Brandschutzmittel sind intumeszierende Materialien (Dämmschichtbildner) wie Blähgraphit oder Wasser abspaltende Stoffe (Ablationsbaustoffe) wie Aluminiumhydroxid. Der Begriff umfasst auch zwei oder mehrere verschiedene unabhängig voneinander oder synergistisch zusammen brandhemmend wirkende Stoffe oder Stoffzusammensetzungen. Ein Beispiel für eine Brandschutzschicht ist eine von einem Dämmschichtbildner ausgekleidete Kabeldurchführung, die im Brandfall stark aufschäumt und so den Querschnitt der Durchführung verstopft, um die Brandweiterleitung über die Kabeldurchführung zu verhindern oder zu verzögern.

Unter einem "Dämmschichtbildner" oder "intumeszierenden Material" wird hier ein Material verstanden, das bei Raumtemperatur ein vergleichsweise geringes Volumen aufweist und unter Hitzeeinwirkung, vorzugsweise bei 150 °C bis 200 °C, eine deutliche Volumenzunahme erfährt, vorzugsweise unter Erzeugung eines erheblichen Blähdrucks von z.B. 1-2 N/mm². In der Regel wird bei einem solchen Material unter Wärmeeinwirkung, d.h. bei Überschreiten einer bestimmten als "Reaktionstemperatur" bezeichneten Temperatur, z.B. 150 °C, eine stark wärmedämmende, thermisch weitgehend stabile Schaumschicht gebildet, die die dahinter liegenden bzw. davon umschlossenen Materialien schützt. Der Schaumfaktor, d.h. das Verhältnis zwischen der Schichtdicke des Dämmschichtbildners im aufgeschäumten Zustand und der Schichtdicke des Dämmschichtbildners vor dem Aufschäumen, beträgt vorzugsweise mindestens 1,5, weiter bevorzugt mindestens 2, 3, 4, 5, 6, 8 oder mindestens 10, besonders bevorzugt mindestens 15, 20, 30, 40, 50 oder 60. Ein Beispiel für ein intumeszierendes Material ist Blähgraphit.

Unter einem "Ablationsbaustoff" werden ablativ wirkende Materialien verstanden, die bei Hitzeeinwirkung nur vergleichsweise gering expandieren, jedoch durch chemische und/oder physikalische Prozesse der Umgebung Wärmeenergie entziehen und dadurch eine Kühlung des mit dem Ablationsbaustoff beschichteten Trägermaterials bewirken. Der Ablationsbaustoff kann sich beispielsweise durch endotherme Reaktionen chemisch verändern, beispielsweise keramisieren, oder verdampfen, sublimieren oder schmelzen. Der Ablationsbaustoff kann beispielsweise Hydrate beinhalten, die bei Erhitzung Wasserdampf freisetzen. Darüber hinaus kann der Ablationsbaustoff gegebenenfalls Substanzen abgeben, die eine flammhemmende Wirkung haben. Nach Abschluss der chemischen und/oder physikalischen Prozesse bleibt häufig eine nichtbrennbare Masse zurück, die zusätzlich thermisch isolierend wirkt.

Unter einer "duroplastischen Folie" wird eine Folie aus duroplastischem Material verstanden. Unter einer metallischen Folie wird eine Folie aus einem Metall verstanden, beispielsweise eine Aluminiumfolie.

Unter einem "Mineralfaserblock" wird hier eine beispielsweise im Wesentlichen quaderförmige nichtbrennbare Platte aus Mineralfasern verstanden. Mineralfasern sind anorganische Fasern wie beispielsweise Steinwolle etc. Die Fasern des erfindungsgemäß vorgesehenen Mineralfaserblocks weisen beispielsweise einen Schmelzpunkt ≥ 1000 °C auf. Die Nennrohdichte beträgt bevorzugt ≥ 150 kg/m³.

Die Formulierung, wonach der Mineralfaserblock eine Ausnehmung aufweist, in die eine Halbschale passend aufgenommen ist, bedeutet, dass die Ausnehmung an die äußere Gestalt der Halbschale angepasst ist, so dass die Halbschale mit ihrem äußeren Umfang im Wesentlichen ohne einen Zwischenraum, Spalt oder dergleichen an Innenfläche der Ausnehmung anliegt. Für den Fall einer im Querschnitt halbkreisförmigen Halbschale ist die Ausnehmung daher beispielsweise ebenfalls halbkreisförmig ausgestaltet.

Wie bereits erwähnt, ist die erfindungsgemäße Brandabschottung eine Kombination aus einer in der DE 10 2014 108 549 A1 beschriebenen Kabel-/Rohrdurchführung und einem Mineralfaserblock mit mindestens einer Ausnehmung, in die die bekannte Kabel-/Rohrdurchführung aufgenommen ist. In einer besonders vorteilhaften Ausgestaltung ist die Halbschale der Kabel-/Rohrdurchführung in die mindestens eine Ausnehmung eingeklebt, besonders bevorzugt mittels eines Brandschutzmittels, beispielsweise eines Ablationsbaustoffs, der Klebeigenschaften aufweist. Geeignet zum Einkleben einer Kabel-/Rohrdurchführung in eine Ausnehmung ist beispielsweise der Ablationsbaustoff PYRO-SAFE FLAMMOTECT-A der Anmelderin.

Bei der Kabel-/Rohrdurchführung können der in der Innenfläche der Halbschale angeordnete und diese vorzugsweise im Wesentlichen oder vollständig bedeckende erste flächige flexible Träger und der die Öffnung der Halbschale verschließende zweite flächige flexible Träger im Bereich mindestens eines Randes einstückig verbunden sein, so dass ein zusammenhängender Träger gebildet ist, der über mindestens einen Rand der Halbschale soweit hinausragt, dass durch Umklappen des hinausragenden Bereichs des flexiblen Trägers in Richtung Innenfläche die Öffnung verschließbar ist. Es ist jedoch bevorzugt, dass der in der Innenfläche der Halbschale angeordnete erste flächige flexible Träger und der die Öffnung der Halbschale verschließende zweite flächige flexible Träger zweistückig ausgebildet sind, d.h. separate Träger bilden.

In einer bevorzugten Ausführungsform der Erfindung ist der erste flächige flexible Träger mittels einer Klebschicht auf der Fläche, die der mit der Brandschutzschicht beschichteten Fläche gegenüberliegt, in die Halbschale eingeklebt. Bei dem in der Innenfläche der Halbschale angeordneten ersten Träger weist die Klebschicht daher zur Innenfläche der Halbschale, bei dem die Öffnung verschließenden zweiten Träger zu der Oberfläche, auf die der zweite Träger aufgebracht wird, z.B. zum Rohboden eines Doppelbodensystems. Bei dieser besonders vorteilhaften Ausführungsform ist der in der Innenfläche der Halbschale angeordnete erste flächige flexible Träger mit einer Fläche in die Halbschale eingeklebt, während auf der gegenüberliegenden Fläche die Brandschutzschicht, vorzugsweise eine Dämmschichtbildnerschicht, angeordnet ist. Es sind auch andere Ausgestaltungen möglich, beispielsweise Halte- oder Klemmeinrichtungen auf der Innenseite der Halbschale, in die der erste Träger eingesteckt bzw. eingeklemmt werden kann.

Die stirnseitigen, d.h. an den beiden in Längsrichtung der Kabel-/Rohrdurchführung liegenden offenen Enden der Halbschale können gegebenenfalls mit Kappen, Schaumstoffzuschnitten, Mineralwolle oder dergleichen, die ihrerseits mit einer Brandschutzschicht beschichtet oder mit einem Brandschutzmittel imprägniert sein können, verschlossen sein. Je nach geforderter Feuerwiderstandsdauer können Kappen oder Zuschnitte beidseitig, einseitig oder auch asymmetrisch innerhalb des Halbschaleninneren angeordnet sein.

Die Halbschale kann aus verschiedenen Materialien gefertigt sein, beispielsweise aus Metall oder Kunststoff. Bei dem Kunststoff handelt es sich vorzugsweise um Polyvinylchlorid (PVC), Polyethylen (PE) oder Polypropylen (PP), oder Kombinationen davon.

Die Geometrie der Halbschale kann regelmäßig oder unregelmäßig sein. Bevorzugt weist die Halbschale einen halbkreisförmigen, halbovalen oder halbpolygonalen Querschnitt, besonders bevorzugt einen halbkreisförmigen oder halbovalen Querschnitt, auf.

Bei den Trägern handelt es sich jeweils vorzugsweise um einen mineralischen oder mineralhaltigen Träger. Beispielsweise kann der Träger aus einem nicht-brennbaren Gewebe bestehen oder ein nicht-brennbares Gewebe umfassen. Besonders bevorzugt umfasst der Träger ein Glasfasergewebe oder besteht daraus. Allerdings sind auch andere Trägermaterialien wie beispielsweise metallische Gewebe verwendbar. Der Träger kann beispielsweise auch aus einer duroplastischen oder metallischen Folie bestehen oder eine duroplastische oder metallische Folie umfassen.

Der Mineralfaserblock kann auf mindestens einer seiner zum Bodenhohlraum weisenden Flächen, vorzugsweise auf beiden Flächen, zusätzlich mit einer Brandschutzschicht beschichtet sein, beispielsweise eine Ablationsbaustoff- oder einem Dämmschichtbildnerschicht.

Die auf dem ersten und zweiten Träger aufgebrachte Brandschutzschicht können gleich oder verschieden sein. Bevorzugt handelt es jeweils sich um einen Dämmschichtbildnerschicht.

In einer bevorzugten Ausführungsform der erfindungsgemäßen Brandabschottung sind sowohl die mindestens eine Ausnehmung als auch die darin passend aufgenommene Halbschale im Querschnitt halbkreisförmig.

In einer besonders bevorzugten Ausführungsform der erfindungsgemäßen Brandabschottung weist der Mineralfaserblock eine Mehrzahl von Ausnehmungen mit darin passend aufgenommenen Halbschalen auf. Die Ausnehmungen können dabei gleichmäßig zueinander beabstandet sein, oder auch zu Gruppen von benachbarten Ausnehmungen zusammengefasst sein. Beispielsweise können alle Ausnehmungen oder Ausnehmungen einer Gruppe im Nullabstand zueinander angeordnet sein. Bei dieser bevorzugten Ausführungsform der erfindungsgemäßen Brandabschottung ist eine Mehrzahl von Ausnehmungen vorgesehen, die in geeigneten Abständen zueinander vorgesehen sind, so dass genügend Möglichkeiten vorhanden sind, Installationselemente durch die Abschottung durchzuführen. Die Ausnehmungen können dabei beispielsweise in einem bestimmten Rastermaß angeordnet sein, dem auch die Installationselemente folgen. Ungenutzte, d.h. nicht belegte, und z.B. für Nachbelegungen vorgesehene Ausnehmungen bzw. Kabel-/Rohrdurchführungen, können beispielsweise wie oben beschrieben, d.h. mittels Kappen, Schaumstoffzuschnitten und dergleichen in geeigneter Weise verschlossen sein.

In einem zweiten Aspekt betrifft die vorliegende Erfindung auch eine Doppelbodenkonstruktion, umfassend eine Brandabschottung nach dem oben beschriebenen ersten Aspekt der Erfindung und eine oberhalb des Mineralfaserblocks oder auf dem Mineralfaserblock angeordnete Doppelbodenplatte.

In einem dritten Aspekt betrifft die vorliegende Erfindung auch ein Verfahren zur Herstellung einer Brandabschottung für Doppelbodenkonstruktionen mit einem Rohboden, mindestens einer über dem Rohboden angeordneten Doppelbodenplatte und einem zwischen Rohboden und Doppelbodenplatte gebildeten Bodenhohlraum mit einer lichten Höhe H_{B}, umfassend die Schritte des
i. Anordnens von mindestens einer Halbschale auf dem Rohboden, wobei die Halbschale eine Innenfläche, eine zum Rohboden hin gerichtete Öffnung mit zwei die Öffnung flankierenden Rändern und einen in der Innenfläche der Halbschale angeordneten ersten flächigen flexiblen Träger umfasst, wobei der in der Innenfläche angeordnete erste Träger auf seiner zum Halbschaleninneren gerichteten Fläche zumindest teilweise mit einer ersten Brandschutzschicht beschichtet ist,
ii. Anordnens eines die Öffnung der Halbschale verschließenden zweiten flächigen flexiblen Trägers, der auf seiner zum Halbschaleninneren gerichteten Fläche zumindest teilweise mit einer zweiten Brandschutzschicht beschichtet ist, und
iii. Anordnens eines im Wesentlichen quaderförmigen Mineralfaserblock mit einer der lichten Höhe H_{B} des Bodenhohlraums entsprechenden Höhe H_{M} und mit mindestens einer zum Rohboden hin offenen, an die Form der Halbschale angepassten, Ausnehmung, so dass die mindestens eine Halbschale in die mindestens eine Ausnehmung passend aufgenommen wird.

Die Erfindung wird im Folgenden anhand von Figuren und bevorzugten Ausführungsformen beispielhaft näher erläutert.
Figur 1 zeigt eine räumliche Ansicht einer Ausführungsform eines Mineralfaserblocks zum Einsatz in einer erfindungsgemäßen Brandabschottung.
Figur 2 zeigt schematisch einen Schnitt durch eine Ausführungsform einer erfindungsgemäßen Brandabschottung.
Figur 3A zeigt eine detailliertere Querschnittansicht zu einer Ausführungsform einer erfindungsgemäßen Brandabschottung. Figur 3B zeigt einen Ausschnitt der in Figur 3A dargestellten Brandabschottung in größerem Detail.
Figur 4 zeigt einen Längsschnitt durch die in Figur 3 dargestellte Brandabschottung.
Figur 5 zeigt schematisch eine Ausführungsform eines erfindungsgemäßen Verfahrens zur Herstellung einer erfindungsgemäßen Brandabschottung.

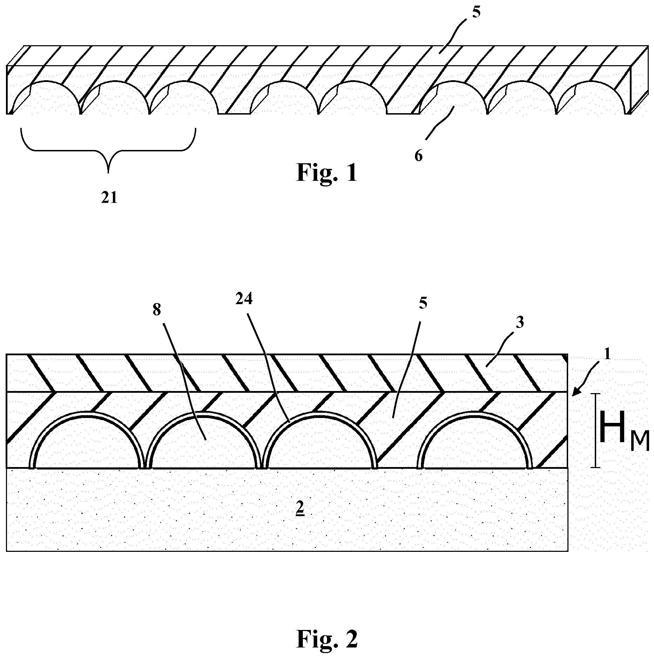

Figur 1 zeigt eine räumliche Ansicht eines Mineralfaserblocks 5, in dessen Unterseite von einer Seite zur anderen durchgehende halbkreisförmige Ausnehmungen 6 vorgesehen sind. Bei dieser Ausführungsform sind die Ausnehmungen 6 in Gruppen 21 zusammengefasst, wobei die Ausnehmungen 6 einer Gruppe 21 jeweils im Nullabstand zueinander angeordnet sind. Bei dieser Ausführungsform sind drei Gruppen 21 gebildet, links und rechts jeweils Gruppen mit jeweils drei Ausnehmungen 6, in der Mitte eine Gruppe 21 mit zwei Ausnehmungen 6, die im Nullabstand zueinander angeordnet sind.

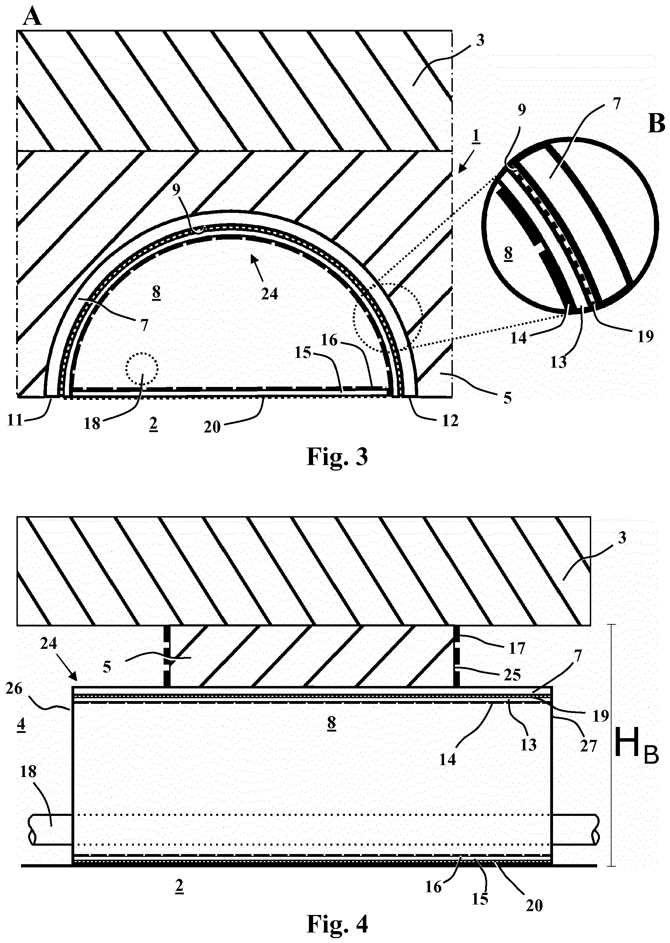

Figur 2 zeigt schematisch einen Querschnitt durch einen Teil einer Ausführungsform einer erfindungsgemäßen Brandabschottung 1. Auf einem Rohboden 2 einer Doppelbodenkonstruktion ist ein Mineralfaserblock 5 mit Ausnehmungen 6 angeordnet, in die jeweils Kabel-/Rohrdurchführungen 24 eingeklebt sind. Drei der Ausnehmungen 6 sind zu einer Gruppe 21 mit Nullabstand zueinander angeordnet. Der Mineralfaserblock 5 weist eine Höhe H_{M} auf, die der lichten Höhe H_{B} des Bodenhohlraums 4 im Wesentlichen entspricht (siehe auch Fig. 4), so dass der Mineralfaserblock 5 den Bodenhohlraum 4 abschottet. Über dem Mineralfaserblock 5 ist eine Doppelbodenplatte 3 angeordnet. Eine bei Doppelbodenkonstruktionen übliche Unterkonstruktion ist hier nicht dargestellt.

Wie aus Figur 3 ersichtlich, umfassen die Kabel-/Rohrdurchführungen 24 jeweils eine hier im Querschnitt halbkreisförmige Halbschale 7, in deren Innenfläche 9 ein erster flächiger flexibler Träger 13 mittels einer ersten Klebschicht 19 eingeklebt ist. Der erste Träger 13 weist auf der zum Halbschaleninneren 8 weisenden Fläche eine erste Brandschutzschicht 14, hier eine Dämmschichtbildnerschicht, auf. Auf dem Rohboden 2 der Doppelbodenkonstruktion ist ein zweiter flächiger flexibler Träger 15 angeordnet, der die von den Rändern 11, 12 flankierte Öffnung 10 der Halbschale 7 verschließt. Auf der zum Halbschaleninneren 8 weisenden Fläche des zweiten Trägers 15 ist eine zweite Brandschutzschicht 16 angeordnet. Bei der zweiten Brandschutzschicht 16 handelt es sich vorzugsweise ebenfalls um eine Dämmschichtbildnerschicht. Der zweite Träger 15 weist eine Klebschicht 20 auf, mittels derer er auf dem Rohboden 2 befestigt ist. Beispielhaft ist hier ein in die Kabel-/Rohrdurchführung 24 eingelegtes Kabel 18 eingezeichnet.

Figur 4 zeigt einen Längsschnitt durch die in Figur 3 dargestellte Ausführungsform einer erfindungsgemäßen Brandabschottung 1. Aus Figur 4 ist ersichtlich, dass die Halbschale 7 länger ist als die Breite des Mineralfaserblocks 5, so dass die Halbschale 7 an ihren beiden Enden 26, 27 in den Bodenhohlraum 4 vorsteht. Durch Verlängerung der Halbschale 7 über die zum Bodenhohlraum 4 weisenden Flächen 25 des Mineralfaserblocks 5 hinaus können beispielsweise brandschutztechnische Anforderungen hinsichtlich von Mindestabständen zwischen einer Öffnung für eine Brandschutztür und der Öffnung der Abschottung eingehalten werden. Es ist allerdings auch möglich, dass die Enden 26, 27 der Halbschale 7 mit den zum Bodenhohlraum 4 weisenden Flächen 25 des Mineralfaserblocks 5 fluchten. Die Flächen 25 des Mineralfaserblocks 5 sind mit einer dritten Brandschutzschicht 17, z.B. einer Ablationsbaustoff-Schicht, beschichtet. Nicht dargestellt sind hier Kappen, Schaumstoffzuschnitte, Mineralfaserplattenzuschnitte oder Mineralwollezuschnitte, die beispielsweise ein Ende 26, 27 oder beide Enden 26, 27 der Halbschale 7 verschließen können, oder beispielsweise auch zentral im Halbschaleninneren 8 angeordnet sein können. Dies ist besonders bevorzugt für den Fall einer Leerbelegung. Die Kappen oder Zuschnitte weisen gegebenenfalls entsprechende Öffnungen zur Durchführung von Kabeln, Rohren und dergleichen auf.

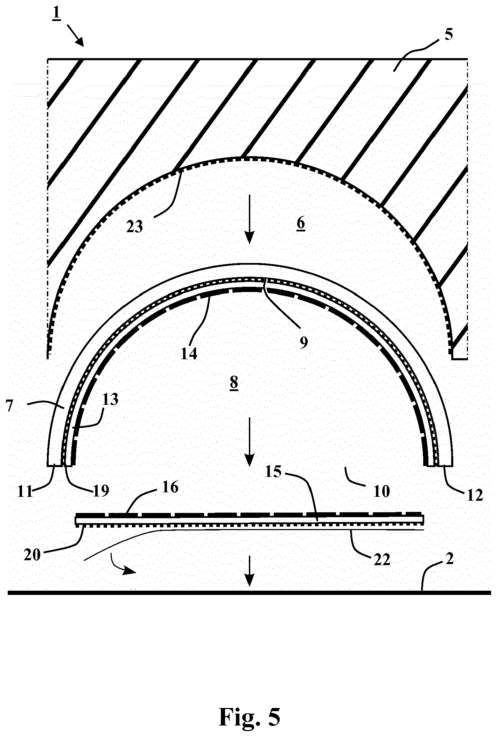

Figur 5 zeigt rein schematisch eine Ausführungsform eines erfindungsgemäßen Verfahren zur Herstellung einer erfindungsgemäßen Brandabschottung. Hierzu kann auf einem Rohboden 2 einer Doppelbodenkonstruktion zunächst ein flächiger flexibler mit einer zweiten Brandschutzschicht 16 beschichteter zweiter Träger 15 mittels einer Klebschicht 20 angeordnet werden. Die Klebschicht 20 des Trägers 15 ist zum Schutz mit einer abziehbaren Abdeckfolie 22 bedeckt, solange der zweite Träger 15 noch nicht auf dem Rohboden 2 angeordnet ist. Eine Halbschale 7, in die bereits ein flächiger flexibler mit einer Brandschutzschicht 14 beschichteter erster Träger 13 mittels einer Klebschicht 19 eingeklebt ist, wird mit ihrer Öffnung 10 zum Rohboden 2 hin so auf dem Rohboden 2 angeordnet, dass der zweite Träger 15 die Öffnung 10 verschließt. Anschließend wird ein Mineralfaserblock 5, der eine innenseitig mit einer Klebschicht 23, hier einem Klebeigenschaften aufweisenden Brandschutzmittel, z.B. einem Ablationsbaustoff, versehene Ausnehmung 6 aufweist, die an die äußere Form der Halbschale 7 angepasst ist, auf dem Rohboden 2 angeordnet, so dass die Halbschale 7 in die Ausnehmung 6 aufgenommen wird.

## Patentansprüche

1. Brandabschottung (1) für Doppelbodenkonstruktionen mit einem Rohboden (2), mindestens einer über dem Rohboden (2) angeordneten Doppelbodenplatte (3) und einem zwischen Rohboden (2) und Doppelbodenplatte (3) gebildeten Bodenhohlraum (4) mit einer lichten Höhe H_{B}, umfassend
i. einen im Wesentlichen quaderförmigen Mineralfaserblock (5) mit einer der lichten Höhe H_{B} entsprechenden Höhe H_{M} und mit mindestens einer zum Rohboden (2) hin offenen Ausnehmung (6),
ii. eine in die mindestens eine Ausnehmung (6) des Mineralfaserblocks (5) passend aufgenommene Halbschale (7), wobei die Halbschale eine zum Halbschaleninneren (8) weisende Innenfläche (9), eine zum Rohboden (2) hin gerichtete Öffnung (10) mit zwei die Öffnung (10) flankierenden Rändern (11, 12) und einen in der Innenfläche (9) der Halbschale (7) angeordneten ersten flächigen flexiblen Träger (13), der auf seiner zum Halbschaleninneren (8) gerichteten Fläche zumindest teilweise mit einer ersten Brandschutzschicht (14) beschichtet ist, umfasst, und
iii. einen die Öffnung (10) der Halbschale (7) verschließenden zweiten flächigen flexiblen Träger (15), der auf seiner zum Halbschaleninneren (8) gerichteten Fläche zumindest teilweise mit einer zweiten Brandschutzschicht (16) beschichtet ist.

2. Brandabschottung nach Anspruch 1, wobei der Mineralfaserblock (5) auf mindestens einer seiner zum Bodenhohlraum (4) weisenden Flächen (25) eine dritte Brandschutzschicht (17), bevorzugt eine Ablationsbaustoffschicht, aufweist.

3. Brandabschottung nach Anspruch 1 oder 2, wobei die Halbschale (7) in die mindestens eine Ausnehmung (6) des Mineralfaserblocks (5) eingeklebt ist, vorzugsweise mittels eines Klebeigenschaften aufweisenden Brandschutzmittels.

4. Brandabschottung nach einem der vorhergehenden Ansprüche, wobei der erste und zweite Träger (13, 15) a) aus einem nicht-brennbaren Gewebe besteht oder ein nicht-brennbares Gewebe umfasst, wobei das Gewebe vorzugsweise ein Glasfasergewebe oder Metallgewebe ist oder umfasst, oder b) aus einer duroplastischen oder metallischen Folie besteht oder eine duroplastische oder metallische Folie umfasst.

5. Brandabschottung nach einem der vorhergehenden Ansprüche, wobei die auf dem ersten Träger (13) angeordnete erste Brandschutzschicht (14) und die auf dem zweiten Träger (15) angeordnete zweite Brandschutzschicht (16) gleich oder verschieden sind, bevorzugt beide Dämmschichtbildnerschichten sind.

6. Brandabschottung nach einem der vorhergehenden Ansprüche, wobei die mindestens eine Ausnehmung (6) und die darin passend aufgenommene Halbschale (7) im Querschnitt halbkreisförmig sind.

7. Brandabschottung nach einem der vorhergehenden Ansprüche, wobei der Mineralfaserblock (5) eine Mehrzahl von Ausnehmungen (6) mit darin passend aufgenommenen Halbschalen (7) aufweist, und wobei mindestens eine Gruppe (21) von Ausnehmungen (6) gebildet ist, die im Nullabstand zueinander angeordnet sind.

8. Doppelbodenkonstruktion, umfassend eine Brandabschottung (1) nach einem der vorhergehenden Ansprüche und eine oberhalb oder auf dem Mineralfaserblock (5) der Brandabschottung (1) angeordnete Doppelbodenplatte (3).

9. Verfahren zur Herstellung einer Brandabschottung nach einem der Ansprüche 1 bis 7, umfassend die Schritte des
i. Anordnens von mindestens einer Halbschale (7) auf dem Rohboden (2), wobei die Halbschale (7) eine Innenfläche (9), eine zum Rohboden (2) hin gerichtete Öffnung (10) mit zwei die Öffnung (10) flankierenden Rändern (11, 12), und einen in der Innenfläche (9) der Halbschale (7) angeordneten ersten flächigen flexiblen Träger (13) umfasst, wobei der in der Innenfläche (9) angeordnete erste flächige Träger (13) auf seiner zum Halbschaleninneren (8) gerichteten Fläche zumindest teilweise mit einer ersten Brandschutzschicht (14) beschichtet ist,
ii. Anordnens eines die Öffnung (10) der Halbschale (7) verschließenden zweiten flächigen flexiblen Trägers (15), der auf seiner zum Halbschaleninneren (8) gerichteten Fläche zumindest teilweise mit einer zweiten Brandschutzschicht (16) beschichtet ist, und
iii. Anordnens eines im Wesentlichen quaderförmigen Mineralfaserblock (5) mit einer der lichten Höhe H_{B} des Bodenhohlraums (4) entsprechenden Höhe H_{M} und mit mindestens einer zum Rohboden (2) hin offenen, an die Form der Halbschale (7) angepassten, Ausnehmung (6), so dass die mindestens eine Halbschale (7) in die mindestens eine Ausnehmung (6) passend aufgenommen wird.

10. Verfahren nach Anspruch 9, ferner umfassend den Schritt des Anordnens einer Doppelbodenplatte (3) auf dem Mineralfaserblock (5).

## Claims

1. Fire barrier (1) for double-floor structures with a bare floor (2), at least one double-floor plate (3) arranged above the bare floor (2) and a hollow floor space (4) formed between the bare floor (2) and the double-floor plate (3) with a clearance H_{B} comprising
i. an essentially cuboid mineral fibre block (5) with height H_{M} corresponding with the clearance H_{B} and with at least one recess (6) open towards the bare floor (2),
ii. a half shell (7) held to fit in the at least one recess (6) of the mineral fibre block (5) wherein the half shell comprises an inner surface (9) facing towards the interior (8) of the half shell, an opening (10) facing the bare floor (2) with two edges (11, 12) flanking the opening (10) and a first flat flexible carrier (13) which is arranged in the inner surface (9) of the half shell (7) and on its surface facing towards the interior (8) of the half shell is at least in sections coated with a first fire-protection layer (14), and
iii. a second flat flexible carrier (15) which closes the opening (10) of the half shell (7) and on its surface facing the interior (8) of the half shell is at least in sections coated with a second fire-protection layer (16).

2. Fire barrier according to claim 1 wherein the mineral fibre block (5) on at least one of its surfaces (25) facing the hollow floor space (4) has a third fire-protection layer (17), preferably an ablation material layer.

3. Fire barrier according to claim 1 or 2 wherein the half shell (7) is stuck into the at least one recess (6) of the mineral fibre block (5), preferably by means of a fire-protection means having adhesive properties.

4. Fire barrier according to any one of the preceding claims wherein the first and the second carrier (13, 15) a) is made of a non-flammable fabric or comprises a non-flammable fabric, wherein the fabric preferably is, or comprises, a glass fibre fabric or metal fabric or b) is made of a duroplastic film or metallic foil or comprises a duroplastic film or metallic foil.

5. Fire barrier according to any one of the preceding claims wherein the fire protection layer (14) arranged on the first carrier (13) and the fire protection layer (16) arranged on the second carrier (15) are the same or different, preferably both insulating layer forming layers.

6. Fire barrier according to any one of the preceding claims wherein the at least one recess (6) and the half-shell (7) held to fit therein are semi-circular in cross-section.

7. Fire barrier according to any one of the preceding claims wherein the mineral fibre block (5) comprises a plurality of recesses (6) with half shells (7) held to fit therein and wherein at least one group (21) of recesses (6) is formed arranged at zero distance between each other.

8. Double-floor structure comprising a fire barrier (1) according to any one of the preceding claims and a double-floor plate (3) arranged above or on the mineral fibre block (5) of the fire barrier (1).

9. Method of producing a fire barrier according to any one of claims 1 to 7 comprising the steps of
i. arranging at least one half shell (7) on the bare floor (2) wherein the half shell (7) has an inner surface (9), an opening (10) facing the bare floor (2) with two edges (11,12) flanking the opening (10) and a first flat flexible carrier (13) arranged in the inner surface (9) of the half shell (7), wherein the first flat carrier (13) arranged in the inner surface (9) is coated on its surface facing the interior (8) of the half shell at least in sections with a first fire-protection layer (14) ,
ii. arranging a second flat flexible carrier (15) which closes the opening (10) of the half shell (7) and which on its surface facing the interior (8) of the half shell is at least in sections coated with a second fire-protection layer (16) and
iii. arranging an essentially cuboid mineral fibre block (5) with a height H_{M} corresponding to the clearance H_{B} of the hollow floor space (4) and with a least one recess (6) open towards the bare floor (2) and adapted to the shape of the half shell (7) so that the at least one half shell (7) is held to fit in the at least one recess (6).

10. Method according to claim 9 also comprising the step of arranging a double floor plate (3) on the mineral fibre block (5).

## Revendications

1. Cloisonnement coupe-feu (1) pour des constructions à plancher surélevé avec un sol brut (2), au moins une plaque de plancher double (3) disposée sur le sol brut (2) et un espace creux de sol (4) formé entre le sol brut (2) et la plaque de plancher double (3) avec une hauteur H_{B} libre, comprenant
i. un bloc de fibres minérales pour l'essentiel de forme parallélépipèdique (5) avec une hauteur H_{M} correspondant à une hauteur libre H_{B} et avec au moins un évidement (6) ouvert vers le sol brut (2),
ii. une demi-coque (7) exactement logée dans au moins un évidement (6) du bloc de fibres minérales (5), sachant que la demi-coque comprend une surface intérieure (9) tournée vers l'intérieur de demi-coque (8), une ouverture (10) dirigée vers le sol brut (2) avec deux bordures (11, 12) entourant l'ouverture (10) et un premier support (13) souple plat disposé dans la surface intérieure (9) de la demi-coque (7), qui est revêtu sur sa surface dirigée vers l'intérieur de demi-coque (8) au moins en partie d'une première couche coupe-feu (14), et
iii. un deuxième support (15) souple plat fermant l'ouverture (10) de la demi-coque (7), qui est revêtu sur sa surface dirigée vers l'intérieur de demi-coque (8) au moins en partie d'une deuxième couche coupe-feu (16).

2. Cloisonnement coupe-feu selon la revendication 1, sachant que le bloc de fibres minérales (5) comporte sur au moins une de ses surfaces (25) tournées vers l'espace creux de sol (4), une troisième couche coupe-feu (17), de préférence une couche de matériau d'ablation.

3. Cloisonnement coupe-feu selon la revendication 1 ou 2, sachant que la demi-coque (7) est encollée dans au moins un évidement (6) du bloc de fibres minérales (5), de préférence au moyen d'un moyen de protection coupe-feu comportant des propriétés adhésives.

4. Cloisonnement coupe-feu selon l'une quelconque des revendications précédentes, sachant que le premier et le deuxième support (13, 15) a) sont composés d'un tissu non combustible ou comprennent un tissu non combustible, sachant que le tissu est ou comprend de préférence un tissu en fibres de verre ou un tissu métallique, ou b) est composé d'une feuille thermodurcissable ou métallique ou comprend une feuille thermodurcissable ou métallique.

5. Cloisonnement coupe-feu selon l'une quelconque des revendications précédentes, sachant que la première couche coupe-feu (14) disposée sur le premier support (13) et la deuxième couche de protection coupe-feu (16) disposée sur le deuxième support (15) sont identiques ou différentes, sont de préférence deux couches génératrices de couche isolante.

6. Cloisonnement coupe-feu selon l'une quelconque des revendications précédentes, sachant qu'au moins un évidement (6) et la demi-coque (7) logée exactement dedans sont en forme de demi-cercle en section.

7. Cloisonnement coupe-feu selon l'une quelconque des revendications précédentes, sachant que le bloc de fibres minérales (5) comporte une pluralité d'évidements (6) avec des demi-coques (7) exactement logées dedans et sachant qu'au moins un groupe (21) d'évidements (6) est formé, qui sont disposés à un intervalle zéro l'un par rapport à l'autre.

8. Construction à plancher surélevé, comprenant un cloisonnement coupe-feu (1) selon l'une quelconque des revendications précédentes et une plaque de plancher double (3) disposée au-dessus ou sur le bloc de fibres minérales (5) du cloisonnement coupe-feu (1).

9. Procédé de fabrication d'un cloisonnement coupe-feu selon l'une quelconque des revendications 1 à 7, comprenant les étapes de
i. mise en place d'au moins une demi-coque (7) sur le sol brut (2), sachant que la demi-coque (7) comprend une surface intérieure (9), une ouverture (10) dirigée vers le sol brut (2) avec deux bordures (11, 12) entourant l'ouverture (10) et un premier support (13) souple plat disposé dans la surface intérieure (9) de la demi-coque (7), sachant que le premier support (13) souple plat disposé dans la surface intérieure (9) est revêtu sur sa surface dirigée vers l'intérieur de demi-coque (8) au moins en partie d'une première couche coupe-feu (14),
ii. mise en place d'un deuxième support (15) souple plat fermant l'ouverture (10) de la demi-coque (7) qui est revêtu sur sa surface dirigée vers l'intérieur de demi-coque (8) au moins en partie d'une deuxième couche coupe-feu (16), et
iii. mise en place d'un bloc de fibres minérales (5) pour l'essentiel de forme parallélépipèdique avec une hauteur H_{M} correspondant à une hauteur libre H_{B} de l'espace creux du sol (4) et avec au moins un évidement (6) ouvert vers le sol brut (2), adapté à la forme de la demi-coque (7), de telle manière qu'au moins une demi-coque (7) est exactement logée dans au moins un évidement (6).

10. Procédé selon la revendication 9, comprenant en plus l'étape de mise en place d'une plaque de plancher double (3) sur le bloc de fibres minérales (5).
